# EUROPÄISCHE PATENTANMELDUNG

(11) **EP 4 198 450 A1**
(43) Veröffentlichungstag der Anmeldung: **21.06.2023**
(21) Anmeldenummer: 22213739.0
(22) Anmeldetag: 15.12.2022
(51) Int. Cl.: G01C 11/02, G01C 15/02, G01C 11/06

(54) **MATTE ZUR DURCHFÜHRUNG EINES PHOTOGRAMMETRIEVERFAHRENS, VERWENDUNG DER MATTE UND ZUGEHÖRIGES VERFAHREN**

(30) Priorität: 17.12.2021 DE 102021133709
(71) Anmelder: rooom AG, 07749 Jena (DE)
(72) Erfinder: Elstner, Hans, 07743 Jena (DE); Bicker, Michael, 07743 Jena (DE); Ramm, Alexander, 07743 Jena (DE)
(74) Vertreter: Meissner Bolte Partnerschaft mbB

(57) **Zusammenfassung**

Es wird eine Matte zur Durchführung eines Photogrammetrieverfahrens angegeben, aufweisend eine Oberseite mit einer Scan-Fläche, auf der ein mittels des Photogrammetrieverfahrens zu erfassendes Objekt platzierbar ist, wobei auf der Scan-Fläche eine Vielzahl von, vorzugsweise voneinander unterscheidbaren, Markern angeordnet ist, die bei Durchführung des Photogrammetrieverfahrens detektierbar sind, um bei der Erstellung eines 3D-Modells des zu erfassenden Objekts mittels des Photogrammetrieverfahrens genutzt zu werden. Im Rahmen der Erfindung werden ferner die Verwendung der Matte zur Durchführung eines Photogrammetrieverfahrens, ein Computerimplementiertes Verfahren zur photogrammetrischen Erstellung eines 3D-Modells eines Objektes, sowie ein computerlesbares Speichermedium angegeben.

## Beschreibung

Die Erfindung betrifft eine Matte zur Durchführung eines Photogrammetrieverfahrens gemäß dem Gegenstand von Anspruch 1, sowie die Verwendung der Matte zur Durchführung eines Photogrammetrieverfahrens gemäß dem Gegenstand von Anspruch 7. Die Erfindung betrifft ferner ein computerimplementiertes Verfahren zur photogrammetrischen Erstellung eines 3D-Modells eines Objektes gemäß dem Gegenstand von Anspruch 8 sowie ein computerlesbares Speichermedium gemäß dem Gegenstand von Anspruch 13.

Als Photogrammmetrie bezeichnet man Verfahren, bei denen aus Fotografien bzw. Bildern von Objekten dreidimensionale (3D)-Modelle der Objekte erstellt werden können. Bei der (digitalen) Photogrammmetrie werden geometrische Informationen des zu erfassenden Objekts aus zweidimensionalen Fotografien extrahiert. Durch die Auswertung von Fotografien aus verschiedenen Blickwinkeln ist es möglich, ein 3D-Modell des zu erfassenden Objekts zu kreieren. Das 3D-Modell stellt dabei ein digitales Modell des erfassten Objekts dar, das Objektkoordinaten und Informationen über die Oberfläche des Objekts wie Texturen und/oder Farben enthält.

Photogrammmetrie findet eine Vielzahl von Anwendungen. Insbesondere im Zuge zunehmender Digitalisierung ist es oftmals wünschenswert, digitale 3D-Modelle von realen Objekten anzufertigen. Dies erlaubt es, sich einen genauen räumlichen Eindruck des betreffenden Objektes zu verschaffen, ohne dabei das Objekt selbst transportieren zu müssen.

Es sind bereits Verfahren bekannt, welche eine derartige Erstellung eines digitalen 3D-Modells erlauben. Beispielsweise beschreibt die DE 10 2016 125 589 A1 ein Verfahren und ein System für einen Bild-Datensatz für photogrammetrische 3D-Rekonstruktion, bei der ein Photogrammetrieverfahren zum Einsatz kommt. Allerdings sind bekannte Verfahren häufig vergleichsweise aufwändig und erfordern eine hohe Anzahl an Fotografien bzw. Bildern des zu erfassenden Objekts, oder benötigen spezialisierte Zusatztechnik, um ein 3D-Modell mit ausreichender Präzision zu erstellen. Zudem ist die beschränkte Genauigkeit der photogrammetrischen Erfassung und die damit einhergehende Beschränkung in der Präzision der digitalen 3D-Modelle weiterhin verbesserungswürdig, insbesondere bei zu erfassenden Objekten mit einer komplexen Geometrie. Häufig ist es beispielsweise notwendig, nach der Durchführung des Photogrammetrieverfahrens das erhaltene 3D-Modell nachzubearbeiten, um eine bessere Übereinstimmung mit dem erfassten Objekt zu erzielen.

Es besteht daher weiterhin der Bedarf, bekannte Ansätze zur photogrammetrischen Erfassung dahingehend weiterzuentwickeln, dass die Erstellung eines 3D-Modells auch von Objekten mit komplexer Geometrie sich mit herkömmlich verfügbaren Mitteln, wie gewöhnlichen Kameras, durchführen lässt, bei gleichzeitiger Sicherstellung einer hohen Qualität des erstellten 3D-Modells.

Der vorliegenden Erfindung liegt somit die Aufgabe zugrunde, die Erstellung von digitalen 3D-Modellen mittels Photogrammmetrie weiter zu verbessern und zu vereinfachen, und dabei auch die Genauigkeit des erhaltenen 3D-Modells zu verbessern.

Die Aufgabe wird durch eine Vorrichtung gemäß Anspruch 1, ein Verfahren gemäß Anspruch 8, sowie ein computerlesbares Speichermedium gemäß Anspruch 13 gelöst. Vorteilhafte Weiterbildungen ergeben sich aus den Unteransprüchen.

Insbesondere wird die Aufgabe gelöst durch eine Matte zur Durchführung eines Photogrammetrieverfahrens, aufweisend eine Oberseite mit einer Scan-Fläche, auf der ein mittels des Photogrammetrieverfahrens zu erfassendes Objekt platzierbar ist,
wobei auf der Scan-Fläche eine Vielzahl von, vorzugsweise voneinander unterscheidbaren, Markern angeordnet ist, die bei Durchführung des Photogrammetrieverfahrens detektierbar sind, um bei der Erstellung eines 3D-Modells des zu erfassenden Objekts mittels des Photogrammetrieverfahrens genutzt zu werden.

Ein wesentlicher Punkt der vorliegenden Erfindung besteht darin, dass die erfindungsgemäße Matte alle Merkmale, die zu einer photogrammetrischen Kombination der aufgenommenen Bilder sowie einer manuellen Nachbearbeitung notwendig sind, in sich vereinigt. Insbesondere stellen die Marker auf der Oberseite der Matte ein Referenzsystem für das Photogrammetrieverfahren bereit. Sie können bei der Auswertung der Bilder während des Photogrammetrieverfahrens detektiert und bei der Erstellung des 3D-Modells genutzt werden, indem die feste räumliche Anordnung der Marker auf der Scan-Fläche der Matte als Referenz für das Photogrammetrieverfahren genutzt wird. Die eindeutige Zuordnung der physischen Marker auf der Scan-Fläche zu ihrem digitalen Abbild in den aufgenommenen Bildern ermöglicht es, nahezu alle zum Objekt gehörenden Bildpunkte in 3D-Punkte umzuwandeln, wodurch die Auflösung der entstehenden Geometrie vervielfacht werden kann. Hierbei kann die Anordnung der Marker auf der Scan-Fläche der Matte als digitale Referenzmaske der Matte in Form eines digitalen Modells der Matte dem Photogrammetrieverfahren zur Verfügung gestellt werden. Vorzugsweise umfasst das digitale Modell der Matte exakte digitale Abbilder aller Marker und deren exakte Position auf der Scan-Fläche. Dies erleichtert es weiter, die Marker, die in den Fotografien bzw. Bildern des Objekts erfasst werden, im Photogrammetrieverfahren als (absolute) Referenz zu verwenden.

Durch das Vorsehen und die Verwendung der erfindungsgemäßen Marker auf der Matte lässt sich selbst mit Fotos einer gewöhnlichen Kamera eine enorme Verbesserung der Genauigkeiten bei der Erstellung des 3D-Modells erzielen. Da in den Bildern, die im Rahmen des Photogrammetrieverfahrens von dem Objekt auf der Matte erfasst werden, stets einige Marker der Matte sichtbar sind, kann über die Marker die Zuordnung der Bilder zueinander eklatant verbessert werden, wodurch die Genauigkeit bei der Erstellung des 3D-Modells verbessert wird. Beispielsweise können mehrere Bilder, die in einem Scan des zu erfassenden Objekts für das Photogrammetrieverfahren enthalten sind, anhand der in den Bildern erfassten Markern zueinander in Bezug gesetzt werden, insbesondere hinsichtlich deren Orientierung und Skalierung.

Es ist dabei besonders vorteilhaft, wenn die Marker voneinander unterscheidbar ausgebildet sind, da dies die Zuordnung der Marker in den verschiedenen Bildern vereinfacht. Dadurch, dass die relative Anordnung der Marker auf der Matte festgelegt ist, bewirkt die Verwendung der erfindungsgemäßen Matte in einem Photogrammetrieverfahren eine signifikante Vereinfachung des Verfahrens bei gleichzeitiger Verbesserung der Präzision, da ein Referenzsystem für das Photogrammetrieverfahren durch bloßes Auslegen der Matte und Platzierung des zu erfassenden Objekts auf der Matte bereitgestellt werden kann. Es ist damit insbesondere nicht erforderlich, Marker zur Verbesserung des Photogrammetrieverfahrens individuell in der Umgebung des Objekts oder an dem Objekt selbst anzubringen, aber dennoch möglich, die Verbesserung und Vereinfachung des Photogrammetrieverfahrens durch die Nutzung von Markern zu erzielen. Die erfindungsgemäße Matte stellt damit einen hybriden Ansatz aus markerbasierter Scanverbesserung und Datenreferenz für das Photogrammetrieverfahren und eine eventuelle Nachbearbeitung des 3D-Modells dar. Vorzugsweise sind die Marker so konfiguriert, dass sie keine Rotationssymmetrie aufweisen. Dadurch kann die Orientierung der Marker in den aufgenommenen Bildern stets verlässlich und eindeutig identifiziert werden.

Die Beschaffenheit der Matte unterliegt grundsätzlich keiner besonderen Beschränkung. Es ist nur wesentlich, dass die Marker auf der Scan-Fläche der Matte deutlich erkennbar ausgebildet sind und dass ein zu erfassendes Objekt auf der Matte platzierbar ist. Vorzugsweise ist die Matte als Kunststoffmatte ausgebildet, auf der die Marker beispielsweise aufgedruckt sind. Das ermöglicht es, die Matte nach Benutzung aufzurollen und platzsparend zu verstauen. Vorzugsweise ist die Oberseite der Matte mit einer Antirutsch-Beschichtung versehen, beispielsweise gummiert, um ein unabsichtliches Verschieben des Objekts während der Aufnahme der Bilder zu verhindern. Es ist besonders bevorzugt, dass die Matte aus abriebresistentem Gummi oder Kunststoff gebildet ist, wobei die Materialstärke ausreichend hoch gewählt ist, so dass sich die Matte plan ausrollen lässt, ohne Falten zu werfen. In einer bevorzugten Ausführungsform ist die Matte aus einer PVC-Plane gebildet.

Als Bild wird im Rahmen der vorliegenden Erfindung insbesondere eine Fotografie des zu erfassenden Objekts bezeichnet, die von einem Nutzer mittels einer Kamera, beispielsweise einer Handykamera oder einer Digitalkamera, aufgenommen wird.

Als Scan wird im vorliegenden Fall eine Datenmenge bezeichnet, die sich aus der Kombination mehrerer Bilder ergibt, wobei die Bilder des Scans während des Photogrammetrieverfahrens einer Bearbeitung unterzogen werden können. Beispielsweise kann ein Scan die Menge der Bildinformationen sein, welche sich aus den Bildern einer Vorderansicht und einer Seitwärtsansicht des Objektes ergibt. Die Menge der Einzelbilder, die in einem Scan enthalten sind, ist im Allgemeinen beliebig. Ein Scan ist somit nicht zwangsläufig gleichzusetzen mit einer Menge an Bildern des zu erfassenden Objekts, sondern umfasst vorzugsweise auch das Ergebnis einer Bearbeitung, beispielsweise einer Skalierung, eines Farbabgleichs, einer Verschiebung, einer Rotation oder einer Kombination der Bilder in dem Scan.

Das zu erstellende 3D-Modell bezeichnet eine dreidimensionale digitale Darstellung des Objekts welche aus der Zusammenführung eines oder mehrerer Scans erstellt wurde. Das 3D-Modell beinhaltet vorzugsweise insbesondere Objektkoordinaten und Informationen über die Oberfläche des Objekts, wie Texturen und/oder Farbinformationen.

Gemäß einer bevorzugten Ausführungsform der Erfindung weist mindestens ein Marker einen maschinenlesbaren Code auf, der vorzugsweise durch mindestens einen Strichcode, Matrix Barcode, QR-Code, n-bit-Kreismarker, eine Passermarke und/oder eine Rahmenmarke gebildet ist. Dies ermöglicht eine eindeutige Identifikation des Markers bzw. der Marker und erleichtert somit die Zuordnung der Marker in verschiedenen Bildern. Die Form und Gestaltung der Marker unterliegt erfindungsgemäß keiner besonderen Beschränkung, es ist lediglich wesentlich, dass die Marker in den aufgenommenen Bildern leicht identifizierbar bzw. detektierbar sind. In einer bevorzugten Ausführungsform sind einer oder mehrere Marker durch einen n-bit Kreismarker gebildet, haben also eine im Wesentlichen kreisförmigen Umriss, innerhalb dessen eine digitale Kodierung enthalten ist, die durch eine entsprechende Musterung des Markers darstellbar ist. Vorzugsweise weisen die Marker eine Farbe auf, die im Wesentlichen komplementär zu der Farbe der Scan-Fläche der Matte ist. Ist die Scan-Fläche der Matte beispielsweise weiß, sind die Marker vorzugsweise schwarz gefärbt. Der hohe Kontrast zwischen Marker und Scan-Fläche erleichtert die Detektion der Marker in den aufgenommenen Bildern.

Gemäß einer Ausführungsform ist die Scan-Fläche im Wesentlichen rechteckig oder im Wesentlichen kreisförmig, vorzugsweise im Wesentlichen quadratisch, weiter vorzugsweise quadratisch, insbesondere mit einer Kantenlänge von mindestens zwei Metern oder mehr. Nimmt die Scan-Fläche die gesamte Oberseite der Matte ein, ist die Matte selbst im Wesentlichen rechteckig oder im Wesentlichen kreisförmig ist, vorzugsweise im Wesentlichen quadratisch, weiter vorzugsweise quadratisch, insbesondere mit einer Kantenlänge von 2 Metern oder mehr.

Dies bietet den Vorteil, dass die äußeren Maße der Matte aus der Kantenlänge, bzw. dem Radius der Matte bekannt sind und bei einer Nachbearbeitung als Maßstab zur Verfügung stehen. Zusätzlich stellt die Größe der Matte sicher, das ein ausreichender Freiraum auf der Matte um das zu erfassende Objekt herum bereitgestellt ist, so dass stets eine ausreichende Zahl von Markern auf den Bildern bzw. Fotografien des Objekts sichtbar ist.

Gemäß einer Ausführungsform der erfindungsgemäßen Matte sind die Marker so konfiguriert und angeordnet, dass sie zur Erstellung einer Bounding-Box um das zu erfassende Objekt genutzt werden können.

Eine Bounding-Box ist hierbei eine virtuelle Begrenzung innerhalb des digitalen 3D-Modells, die das 3D-Modell des zu erfassenden Objekts vollständig umgibt. Die Bounding-Box ist vorzugsweise quaderförmig. Alternativ wird die Bounding-Box durch ein Bounding-Volume mit allgemeinerer Geometrie, beispielsweise durch eine Zylinderform mit einer beliebigen Grundfläche gebildet. Anhand der Bounding-Box kann indiziert werden, welche Teile des Scans zum 3D-Modell des Objekts gehören.

Die Anordnung der Marker auf der Scan-Fläche unterliegt keiner besonderen Beschränkung. Vorzugsweise ist zumindest ein Teil der Marker oder alle Marker entlang einer ersten Diagonale und einer zweiten Diagonale der Scan-Fläche angeordnet sind, vorzugsweise im Wesentlichen äquidistant und/oder mit einem festgelegten Abstand zueinander. Diese Anordnung der Marker ist besonders bei einer Matte bevorzugt, deren Scan-Fläche rechteckig oder quadratisch ist. Bei einer im Wesentlichen kreisförmigen Scan-Fläche ist es bevorzugt, dass ein Teil der Marker oder alle Marker auf Geraden liegen, die durch den Mittelpunkt der im Wesentlichen kreisförmigen Scan-Fläche verlaufen.

In einer weiteren Ausführungsform sind auf der Scan-Fläche der Matte Größenreferenzen angebracht. Diese können zur Skalierung und Bestimmung der relativen Positionierung eines zu erfassenden Objekts auf der Scan-Fläche während des Photogrammetrieverfahrens genutzt werden. Ferner können die Größenreferenzen nachträgliche Modifikationen des 3D-Modells vereinfachen. Die Größenreferenzen haben vorzugsweise die Form von um den Mittelpunkt der Scan-Fläche der Matte zentrierten, vorzugsweise linienförmigen, konzentrischen Kreisen und/oder Rechtecken. Dies erlaubt es einem Nutzer, das Objekt möglichst zentral, oder auf eine andere Weise speziell positioniert, auf der Matte zu platzieren. Eine genaue Kenntnis der Positionierung erlaubt wiederum eine einfachere Nachbearbeitung, da sie die räumliche Zuordnung verschiedener Bildern zueinander erleichtert.

Ferner können als Größenreferenzen Längenskalen, beispielsweise Millimeterskalen, auf der Oberseite der Matte bzw. auf der Scan-Fläche vorgesehen sein. Derartige Längenskalen sind vorzugsweise an den Rändern der Scan-Fläche bzw. der Matte ausgebildet.

Die Größenreferenzen und Längenskalen helfen dabei, insbesondere in der Nachbearbeitung, eine maßstabsgetreue Erfassung des Objekts zu überprüfen. Längenskalen haben dabei insbesondere den Vorteil, dass sich Längenmessungen daran leicht vornehmen lassen.

In einer weiteren Ausführungsform sind auf der Scan-Fläche der Matte Farbreferenzen ausgebildet. Diese ermöglichen einen Weißabgleich und/oder eine Farbkorrektur bei Durchführung des Photogrammetrieverfahrens.

Vorzugsweise sind mehrere Farbreferenzen vorgesehen, die auf der Scan-Fläche verteilt sind, um eine möglichst gute Sichtbarkeit mindestens einer Farbreferenz in den verschiedenen Bildern sicherzustellen. Vorzugsweise umfassen die Farbreferenzen flächige Farbwiedergaben einer Vielzahl von Farben, die vorzugsweise gemäß einem bekannten Farbstandard gewählt sind. Dies ermöglicht es, die Farben des Objekts in den Bildern des Scans auf einer objektiven Skala einzuordnen.

Zusätzlich sind, gemäß einer weiteren Ausführungsform, auf der Scan-Fläche der Matte Winkelmarkierungen ausgebildet, welche die Bestimmung von Winkeln der Positionierung des Objekts erkennbar machen. Vorzugsweise sind die Winkelmarkierungen in Gestalt von sich von einem Mittelpunkt der Scan-Fläche der Matte in radialer Richtung erstreckender Linien vorgesehen, welche einen festgelegten Winkel zueinander haben.

Die Winkelmarkierungen erleichtern es, die Orientierung und Positionierung des Objekts auf verschiedenen Bildern miteinander abzugleichen, indem zum Beispiel ein Winkel zwischen einer Referenzlinie auf der Scan-Fläche und einem Merkmal des Objekts bestimmt wird. Auch können die Winkelmarkierungen genutzt werden, um die Position der Kamera relativ zum Objekt bei Erstellung der Bilder zu bestimmen.

Es ist ferner bevorzugt, dass auf der Scan-Fläche mindestens eine Richtungsmarkierung ausgebildet ist, die eine Richtung auf der Scan-Fläche angibt. Die mindestens eine Richtungsmarkierung kann beispielsweise durch einen Pfeil gebildet sein. Um die Sichtbarkeit der Richtungsmarkierung in einer möglichst großen Anzahl von aufgenommenen Bildern sicherzustellen, können auf der Scan-Fläche mehrere Richtungsmarkierungen ausgebildet sein, die vorzugsweise alle parallel zueinander ausgerichtet sind bzw. alle dieselbe Richtung auf der Scan-Fläche angeben. Dies stellt eine absolute Richtung auf der Scan-Fläche für das Photogrammetrieverfahren bereit. Da in Photogrammetrieverfahren häufig keine absoluten Rotationen erfasst werden können und auch die Anordnung der Marker ohne Angabe einer Richtungsreferenz im Raum beliebig rotiert sein kann, erleichtert das Bereitstellen der mindestens einen Richtungsmarkierung die Bestimmung einer absoluten Richtung als Referenz für das Photogrammetrieverfahren. Damit kann die Erstellung des 3D-Modells weiter vereinfacht und hinsichtlich der Genauigkeit verbessert werden.

Als zusätzliche Hilfe für den Benutzer können auch Anleitungsschritte auf der Matte aufgedruckt werden, welche den Ablauf des Verfahrens anleiten. Darin können insbesondere Anweisungen und Beispiele enthalten sein, aus welchen Richtungen welche Anzahl von Fotos zu erstellen sind, welche Lichtverhältnisse zu gewährleisten sind und ähnliches.

Die erfindungsgemäße Aufgabe wird ferner gelöst durch ein computerimplementiertes Verfahren zur photogrammetrischen Erstellung eines 3D-Modells eines Objektes, vorzugsweise unter Verwendung der obenstehend beschriebenen Matte, aufweisend die folgenden Schritte:
- Platzieren eines zu erfassenden Objekts auf einer Scan-Fläche einer Matte mit Markern, die vorzugsweise unterscheidbar ausgebildet sind;
- Fotografieren des Objektes aus einer Vielzahl unterschiedlicher Richtungen zur Erstellung von Bildern des Objekts und zumindest eines Teils der Marker auf der Scan-Fläche;
- Skalieren eines oder mehrerer der Bilder, anhand eines Abgleichs der erfassten Bilder unter Nutzung der in den Bildern erfassten Marker;
- Erstellung eines 3D-Modells des Objektes, auf Grundlage der bearbeiteten Bilder.

Mit dem erfindungsgemäßen Verfahren lassen sich dieselben Vorteile erzielen, die obenstehend in Bezug auf die erfindungsgemäße Matte beschrieben wurden. Merkmale der Matte, insbesondere funktionale Merkmale der strukturellen Elemente der Matte, sind als Verfahrensschritte auf das erfindungsgemäße Verfahren übertragbar. Ebenso sind Merkmale des erfindungsgemäßen Verfahrens auf die erfindungsgemäße Matte übertragbar, indem die Matte derart ausgebildet wird, dass sie zur Ausführung der entsprechenden Verfahrensmerkmale ausgebildet und geeignet ist. Genauso wie die erfindungsgemäße Matte vorzugsweise zur Durchführung des vorstehend beschriebenen erfindungsgemäßen Verfahrens ausgebildet ist und eingesetzt wird, ist es bevorzugt, dass das erfindungsgemäße Verfahren unter Verwendung einer erfindungsgemäßen Matte durchgeführt wird. Die vorliegende Erfindung umfasst ferner die Verwendung der erfindungsgemäßen Matte zur Durchführung eines Photogrammetrieverfahrens.

Gemäß einer bevorzugten Ausführungsform umfasst das Verfahren das Bereitstellen eines digitalen Modells der Matte, enthaltend Informationen über die Anordnung der Marker auf der Scan-Fläche der Matte. Vorzugsweise umfasst das digitale Modell der Matte exakte digitale Abbilder aller Marker und deren exakte Position auf der Scan-Fläche. Das digitale Modell der Matte wird bei der photogrammetrischen Erstellung des 3D-Modells des Objekts berücksichtigt. Dies erleichtert den Abgleich der Bilder und erhöht die Präzision des Photogrammetrieverfahrens, da die Positionen der Marker in den Bildern mit der absoluten Information über die Anordnung bzw. Positionen der Marker in dem digitalen Modell abgeglichen werden können. Vorzugsweise umfasst der Schritt des Skalierens eines oder mehrerer der Bilder einen Abgleich der Positionen der in den Bildern erfassten Marker mit dem digitalen Modell der Matte, um die Präzision des Verfahrens weiter zu erhöhen. Zudem erlaubt die Bereitstellung des digitalen Modells der Matte für jedes erstellte Bild eine Bestimmung der Ausrichtung und Positionierung der Kamera relativ zu der Matte bei der Bilderstellung, da anhand der in dem jeweiligen Bild erfassten Marker durch Abgleich mit dem digitalen Modell der Matte die Position der Kamera relativ zu der Matte bestimmt werden kann, beispielsweise mittels Triangulation.

Vorzugsweise umfasst das Verfahren das Erstellen einer Bounding-Box um das Objekt in dem 3D-Modell. Die Erstellung der Bounding-Box erfolgt vorzugsweise unter Berücksichtigung der in den Bildern erfassten Marker, weiter vorzugsweise unter Berücksichtigung von Größenreferenzen auf der Scan-Fläche, weiter vorzugsweise mittels eines Abgleichs der erfassten Bilder mit dem digitalen Modell der Matte.

Es ist weiterhin bevorzugt, dass das Verfahren das Durchführen eines Weißabgleichs und/oder einer Farbkorrektur der Bilder umfasst. Der Weißabgleich und/o-der die Farbkorrektur der Bilder erfolgen vorzugsweise unter Berücksichtigung von auf der Scan-Fläche der Matte angebrachten ausgebildeten Farbreferenzen. Vorzugsweise umfasst der Abgleich einen Vergleich der Aufnahmen der Farbreferenzen in den Bildern mit Farbreferenzinformation, die in dem digitalen Modell der Matte enthalten ist.

Gemäß einer weiteren bevorzugten Ausführungsform umfasst das Platzieren des zu erfassenden Objekts auf der Scan-Fläche der Matte ein Platzieren von einem oder mehreren transparenten Spacern auf der Matte, auf denen das Objekt derart platziert wird, dass die Spacer zwischen der Matte und dem Objekt angeordnet sind.

Die Verwendung transparenter Spacer bietet mehrere Vorteile. Zum einen wird das Objekt durch die Verwendung der Spacer erhöht auf der Matte platziert. Dies erlaubt es, auch Bilder des Objekts von unten anzufertigen. Die transparenten Spacer werden aufgrund der Transparenz im Photogrammetrieverfahren nicht erfasst und tauchen damit nicht als Artefakte im 3D-Modell auf. Zudem ist aufgrund der Tatsache, dass die Spacer transparent sind, ein größerer Bereich der Scan-Fläche in den Bildern sichtbar, so dass eine größere Anzahl von Markern, Größenreferenzen, Farbreferenzen und/oder Winkelmarkierungen bei der Auswertung der Bilder im Photogrammetrieverfahren berücksichtigt werden kann. Die Spacer bestehen aus einem transparenten Material, beispielsweise aus Plexiglas, und sind vorzugsweise zylinder-, quader- oder würfelförmig.

Im Rahmen der vorliegenden Erfindung wird ferner ein computerlesbares Speichermedium angegeben, welches Instruktionen enthält, die mindestens einen Prozessor dazu veranlassen, das oben beschriebene Verfahren zu implementieren, wenn die Instruktionen durch den mindestens einen Prozessor ausgeführt werden.

Nachfolgend wird die Erfindung auch hinsichtlich weiterer Einzelheiten, Merkmale und Vorteile beschrieben, die anhand der Figuren näher erläutert werden. Die beschriebenen Merkmale und Merkmalskombinationen, wie nachfolgend in den Figuren der Zeichnung gezeigt und anhand der Zeichnung beschrieben, sind nicht nur in der jeweils angegebenen Kombination, sondern auch in anderen Kombinationen oder in Alleinstellung anwendbar, ohne dass damit der Rahmen der Erfindung verlassen wird.

Hierbei zeigen
- Fig.1: eine Draufsicht der Matte gemäß einem Ausführungsbeispiel der Erfindung.
- Fig.2: eine schematische perspektivische Ansicht eines Ausführungsbeispiels der Matte mit einem darauf platzierten Objekt, in der eine Bounding-Box dargestellt ist.
- Fig. 3: eine perspektivische Ansicht der Matte gemäß einem Ausführungsbeispiel der Erfindung, mit darauf befindlichem Objekt.
- Fig. 4: eine perspektivische Ansicht der Matte gemäß einem Ausführungsbeispiel der Erfindung, mit einem Objekt welches auf den Spacern angeordnet ist.

Die Figuren sind lediglich schematischer Natur und dienen ausschließlich dem Verständnis der Erfindung. Gleichartige Elemente sind in der Beschreibung der Ausführungsbeispiele mit denselben Bezugszeichen versehen.

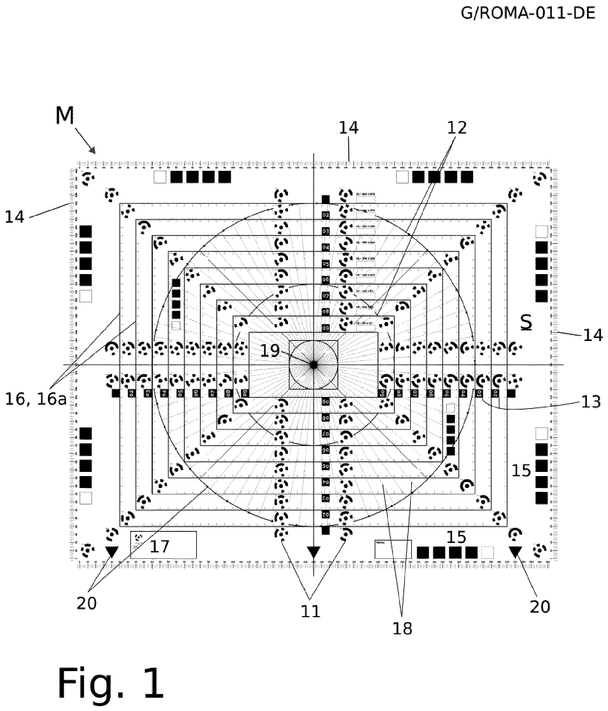

Fig. 1 zeigt eine Draufsicht der Matte M gemäß einem Ausführungsbeispiel der Erfindung. Die Matte M weist in diesem Ausführungsbeispiel eine im Wesentlichen quadratische Form auf. Auf ihrer Oberseite weist die Matte M eine Scan-Fläche S auf, die im vorliegenden Ausführungsbeispiel die gesamte Oberseite der Matte M einnimmt. Die Scan-Fläche S weist eine Vielzahl von Markern 11 auf, welche im vorliegenden Ausführungsbeispiel die Gestalt von kreisförmigen 12-bit Markern haben und auf der Scan-Fläche der Matte verteilt sind. Die Marker 11 besitzen keine Rotationssymmetrie, was eine Identifikation der Ausrichtung der Matte erleichtert. Des Weiteren weist die Scan-Fläche S mehrere konzentrische Größenreferenzen 16 in Form von konzentrischen Rechtecken, sowie farbige Labels 13 und konzentrische Kreise 12 auf, welche als Größen- und/oder Positionsreferenzen dienen. Entlang der rechteckigen Größenreferenzen befinden sich weitere Maßstäbe 16a, zur erleichterten Erkennung von Größen bei Durchführung eines Photogrammetrieverfahrens unter Verwendung der Matte M.

Entlang der Außenkanten der Matte M befinden sich Maßstäbe 14, welche ebenfalls einen Größenmaßstab bieten. Im vorliegenden Ausführungsbeispiel sind die Maßstäbe 14 als Längenskalen ausgebildet. Auf der Scan-Fläche S verteilt finden sich zudem Farbmarkierungen 15, die eine spätere Farbkorrektur oder einen Weißabgleich ermöglichen. Weiterhin sind Winkelmarkierungen 18 durch den Mittelpunkt 19 der Scan-Fläche S aufgedruckt, welche in einem bekannten Winkel zu einander stehen. Diese erleichtern die Bestimmung von relativen und absoluten Winkelbeziehungen bei der Aufnahme von Bildern eines Objektes O aus verschiedenen Winkeln. Auch gezeigt ist ein Aufdruck mit einer Anleitung 17 für den Benutzer. Auf der Scan-Fläche S sind ferner Richtungspfeile 20 ausgebildet, welche die Ausrichtung der Matte M als Ganzes angeben. Die Richtungspfeile 20 können auch auf den Größenreferenzen 12 oder auf anderen Größenreferenzen (nicht dargestellt) angebracht sein, um eine Orientierungshilfe zu bieten.

Die Matte M ist dazu vorgesehen, in einem Photogrammetrieverfahren verwendet zu werden. Hierbei wird ein Objekt O, zu dem ein 3D-Modell mittels Photogrammetrie erstellt werden soll, auf der Scan-Fläche S der Matte M platziert. Vorzugsweise erfolgt die Platzierung derart, dass das Objekt O möglichst mittig auf der Scan-Fläche S platziert wird. Dadurch ist sichergestellt, dass aus allen Blickrichtungen ein möglichst großer Bereich der Scan-Fläche S sichtbar ist. Das auf der Scan-Fläche S platzierte Objekt O wird dann aus einer Vielzahl unterschiedlicher Richtungen fotografiert. Damit werden Bilder des Objekts O erstellt, auf denen zumindest ein Teil der Marker 11 auf der Scan-Fläche S der Matte M sichtbar ist. Die Bilder bilden einen Scan des Objekts O. Vorzugsweise sind zumindest in einem Teil der Bilder auch weitere Referenzgrößen der Scan-Fläche wie die Größenreferenzen 12, 16, die Maßstäbe 14, 16a, die Farbmarkierungen 15, die Winkelmarkierungen 18 und/oder die Richtungspfeile 20 sichtbar. Die aus unterschiedlichen Richtungen bzw. Perspektiven aufgenommenen Bilder werden dann zueinander skaliert. Für die Skalierung werden die in den Bildern erfassten Marker 11 der Scan-Fläche S verwendet. Vorzugsweise wird ferner zumindest ein Teil der weiteren Referenzmerkmale der Scan-Fläche S, also die Größenreferenzen 12, 16, die Maßstäbe 14, 16a, die Farbmarkierungen 15, die Winkelmarkierungen 18 und/o-der die Richtungspfeile 20, genutzt, um die Bilder aufeinander zu skalieren und/o-der abzugleichen. Auf der Grundlage der aufeinander skalierten und/oder abgeglichenen Bilder kann dann ein 3D-Modell des Objekts O mittels Photogrammetrie erstellt werden.

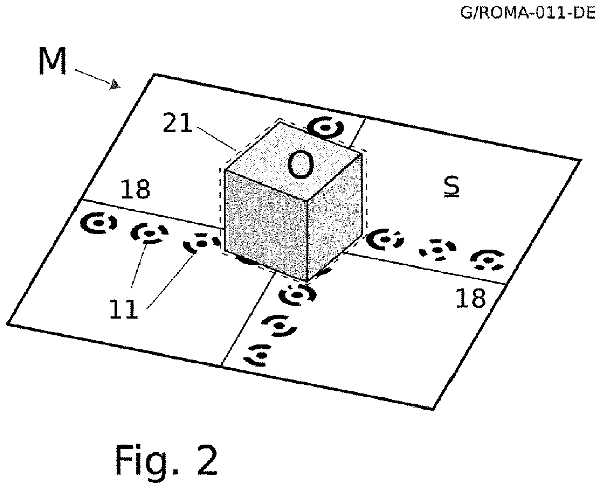

Fig. 2 zeigt eine perspektivische Ansicht einer Matte M gemäß einem weiteren Ausführungsbeispiel der Erfindung, auf der ein Objekt O platziert ist. Ebenfalls eingezeichnet ist eine Bounding-Box 21, welche in einem Scan die Abgrenzung eines 3D-Modells des Objekts O gegenüber dem Hintergrund ermöglicht. Die Bounding-Box 2 1kann dabei beispielsweise unter anderem unter Berücksichtigung der Abdeckung der verschiedenen Marker 11 in den Bildern eines Scans bestimmt werden. Vorzugsweise kann die Erstellung der Bounding-Box 21 dabei automatisch von einer Photogrammmetriesoftware übernommen werden. Eine Erstellung der Bounding-Box 21 um das Objekt O kann aber auch in einem oder mehreren Bildern von Hand durch den Benutzer erfolgen. Je enger die Bounding-Box 21 dabei in der Vielzahl genommener Bilder am Objekt O anliegend definiert wird, desto effizienter kann die spätere Zusammenführung der Bilder zu einem Modell ablaufen. Insbesondere verringert sich durch eine akkurate Bestimmung der Bounding-Box 21 auch der Aufwand bei der eventuell notwendigen manuellen Nachbearbeitung der Bilder.

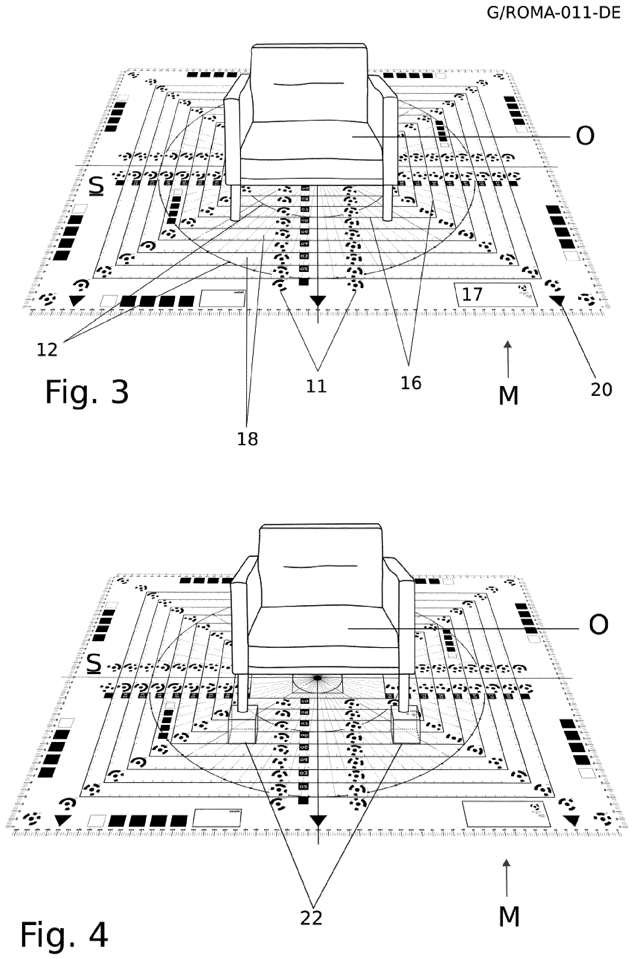

Fig. 3 zeigt eine perspektivische Ansicht einer Matte M, auf welcher ein Objekt O platziert ist, gemäß einem weiteren Ausführungsbeispiel. Auf der Scan-Fläche S ist ein Objekt O angeordnet, das mittels Photogrammetrie erfasst werden soll. Anhand der verdeckten, oder teilweise verdeckten Marker 11 können die Umrisse des Objektes O genau erfasst werden. Anhand der Größenreferenzen 16, bzw. 12 ist eine spätere Skalierung der Bilder innerhalb des Scans zueinander mit deutlich reduziertem Aufwand möglich. Die Richtungspfeile 20, optional zusammen mit den Winkelmarkierungen 18, können dabei verwendet werden, um die Perspektive, aus der Bilder des Scans aufgenommen wurden, zu bestimmen.

Bei der Durchführung des erfindungsgemäßen Verfahrens, insbesondere unter Verwendung der erfindungsgemäßen Matte M, wird somit die Erstellung eines 3D-Modells aus einer Vielzahl von Bildern aus unterschiedlichen Perspektiven deutlich erleichtert. Vorzugsweise kann die aufgedruckte Anleitung 17 Vorgaben dazu machen aus welchen Winkeln oder in welchen Winkelintervallen gemäß den entsprechenden Markierungen 20 und 18 Bilder aufzunehmen sind. Die Matte M gemäß den vorstehend erläuterten Ausführungsbeispielen erlaubt eine erhebliche Erhöhung der Genauigkeit eines zu erstellenden 3D-Modells. Die Qualität des erzeugten 3D-Modells hängt maßgeblich von der Anzahl erkannter, gemeinsamer Merkmale in verschiedenen Bildern ab. Aufgrund von Ungenauigkeiten beträgt die Menge an generierten 3D-Punkten häufig nur einen sehr geringen Bruchteil an Bildpunkten bzw. Kamera-Pixeln. Durch die Bereitstellung der Matte M mit den beschriebenen Merkmalen kann ohne nennenswerten Aufwand eine Umgebung für ein Photogrammetrieverfahren geschaffen werden, die aufgrund der Merkmale der Matte M eine Vielzahl unterschiedlicher absoluter Referenzen bereitstellt, die bei der Durchführung des Photogrammetrieverfahrens genutzt werden können, um den Abgleich der Bilder zueinander und damit die Genauigkeit des erstellten 3D-Modells signifikant zu verbessern.

Fig. 4 zeigt die perspektivische Ansicht einer Matte M gemäß einem weiteren Ausführungsbeispiel, auf welcher ein Objekt O auf Spacern 22 platziert ist. Die vorzugsweise rutschfeste Ausführung der Scanfläche S erleichtert dabei ein Platzieren des Objekts O. Das Objekt O ist dabei teilweise oder ganz auf den Spacern 22 angeordnet. Das Platzieren des Objektes auf der Scanfläche S der Matte M mit Zwischenlage der Spacer 22 erleichtert zudem das Fotografieren des Objektes aus einer Vielzahl unterschiedlicher Richtungen. Insbesondere lassen sich so auch Aufnahmen der Unterseite, oder eines Teils der Unterseite des Objektes O erzielen. Damit verbessert sich die dreidimensionale Auflösung des 3D-Modells des Objektes O, wenn die Bilder zu einem Modell zusammengefügt werden. Durch ihre Transparenz lassen sich die Spacer 22 gut vom Objekt O selbst unterscheiden, was sowohl bei der nachträglichen Bearbeitung der Bilder als auch bei der Trennung der Spacer 22 von dem 3D-Modell des Objekts O von Vorteil ist.

### BEZUGSZEICHENLISTE

- M: Matte
- S: Scan-Fläche
- O: Objekt
- B: Bild
- 11: Marker
- 12, 16: Größenreferenzen
- 14, 16a: Maßstab
- 15: Farbmarkierungen
- 17: Anleitung für Benutzer
- 18: Winkelmarkierungen
- 19: Mittelpunkt des Scan-Bereichs
- 20: Richtungspfeile
- 21: Bounding-Box
- 22: Spacer

## Patentansprüche

1. Matte zur Durchführung eines Photogrammetrieverfahrens, aufweisend eine Oberseite mit einer Scan-Fläche, auf der ein mittels des Photogrammetrieverfahrens zu erfassendes Objekt platzierbar ist, wobei auf der Scan-Fläche eine Vielzahl von, vorzugsweise voneinander unterscheidbaren, Markern angeordnet ist, die bei Durchführung des Photogrammetrieverfahrens detektierbar sind, um bei der Erstellung eines 3D-Modells des zu erfassenden Objekts mittels des Photogrammetrieverfahrens genutzt zu werden.

2. Matte nach Anspruch 1, wobei mindestens ein Marker einen maschinenlesbaren Code aufweist, der vorzugsweise durch einen Strichcode, Matrix Barcode, QR-Code, n-bit-Kreismarker, Passermarke und/oder Rahmenmarke gebildet ist.

3. Matte nach Anspruch 1 oder 2, wobei die Scan-Fläche im Wesentlichen rechteckig oder im Wesentlichen kreisförmig ist, vorzugsweise im Wesentlichen quadratisch, weiter vorzugsweise quadratisch, insbesondere mit einer Kantenlänge von mindestens zwei Metern.

4. Matte nach einem der vorhergehenden Ansprüche, wobei die Marker so konfiguriert und auf der Scan-Fläche angeordnet sind, dass sie zur Erstellung einer Bounding-Box um das zu erfassende Objekt genutzt werden können,
wobei zumindest ein Teil der Marker vorzugsweise entlang einer ersten Diagonale und einer zweiten Diagonale der Scan-Fläche angeordnet sind, vorzugsweise im Wesentlichen äquidistant und/oder mit einem festgelegten Abstand zueinander.

5. Matte nach einem der vorhergehenden Ansprüche, wobei auf der Scan-Fläche Größenreferenzen zur Skalierung und Bestimmung der relativen Positionierung eines zu erfassenden Objekts auf der Scan-Fläche während des Photogrammetrieverfahrens ausgebildet sind, welche vorzugsweise die Form von um den Mittelpunkt der Scan-Fläche der Matte zentrierten, konzentrischen Kreisen und/oder Rechtecken und/oder von Längenmarkierungen entlang einer und/oder mehrerer der Außenkanten eines oder mehrerer der konzentrischen Rechtecke und/oder der Scan-Fläche der Matte haben.

6. Matte nach einem der vorhergehenden Ansprüche, wobei auf der Scan-Fläche Farbreferenzen ausgebildet sind, die einen Weißabgleich und/oder eine Farbkorrektur bei Durchführung des Photogrammetrieverfahrens ermöglichen.

7. Verwendung einer Matte nach einem der vorhergehenden Ansprüche zur Durchführung eines Photogrammetrieverfahrens.

8. Computerimplementiertes Verfahren zur photogrammetrischen Erstellung eines 3D-Modells eines Objektes, vorzugsweise unter Verwendung einer Matte nach einem der Ansprüche 1 bis 6, aufweisend die folgenden Schritte:
• Platzieren eines zu erfassenden Objekts auf einer Scan-Fläche einer Matte mit Markern, die vorzugsweise unterscheidbar ausgebildet sind;
• Fotografieren des Objektes aus einer Vielzahl unterschiedlicher Richtungen zur Erstellung von Bildern des Objekts und zumindest eines Teils der Marker auf der Scan-Fläche;
• Skalieren eines oder mehrerer der Bilder, anhand eines Abgleichs der erfassten Bilder unter Nutzung der in den Bildern erfassten Marker;
• Erstellung eines 3D-Modells des Objektes, auf Grundlage der bearbeiteten Bilder.

9. Verfahren nach Anspruch 8, aufweisend das Erstellen einer Bounding-Box um das Objekt in dem 3D-Modell.

10. Verfahren nach Anspruch 8 oder 9, aufweisend das Bereitstellen eines digitalen Modells der Matte, insbesondere eines digitalen Modells der Scan-Fläche der Matte, wobei das digitale Modell der Matte bei der photogrammetrischen Erstellung des 3D-Modells des Objektes berücksichtigt wird.

11. Verfahren nach einem der Ansprüche 8 bis 10, aufweisend das Durchführen eines Weißabgleichs und/oder einer Farbkorrektur der Bilder, anhand eines Abgleichs von auf der Scan-Fläche ausgebildeten Farbreferenzen.

12. Verfahren nach einem der Ansprüche 8 bis 11, wobei das Platzieren des zu erfassenden Objekts auf der Scan-Fläche der Matte ein Platzieren von einem oder mehreren transparenten Spacern auf der Matte umfasst, auf denen das Objekt derart platziert wird, dass die Spacer zwischen der Matte und dem Objekt angeordnet sind.

13. Computerlesbares Speichermedium, welches Instruktionen enthält, die mindestens einen Prozessor dazu veranlassen, das Verfahren nach einem der Ansprüche 8 bis 12 zu implementieren, wenn die Instruktionen durch den mindestens einen Prozessor ausgeführt werden.
